Europäisches Patentamt

European Patent Office

Office européen des brevets

(19)

(11) Publication number: **0 273 845 B1**

(12) **EUROPEAN PATENT SPECIFICATION**

(45) Date of publication of patent specification: **04.09.91**    (51) Int. Cl.⁵: **G03B 35/00, G03B 35/08, G03B 35/24**

(21) Application number: **87500089.5**

(22) Date of filing: **23.12.87**

(54) **Equipment and process for obtaining three-dimensional moving images, that is four-dimensional images in both colour and in black and white.**

(30) Priority: **29.12.86 ES 8603612**

(43) Date of publication of application:
**06.07.88 Bulletin 88/27**

(45) Publication of the grant of the patent:
**04.09.91 Bulletin 91/36**

(84) Designated Contracting States:
**AT BE CH DE FR GB GR IT LI LU NL SE**

(56) References cited:
**DE-A- 2 542 159**
**US-A- 3 501 230**
**US-A- 3 508 920**
**US-A- 4 086 585**
**US-A- 4 525 045**

**HOBBY, no. 20, September 26, 1983, Stuttgart, R. STERBAK "Vier Augen machen ein 3-D-Foto, pp 52, 53**

(73) Proprietor: **Dominguez Montes, Juan**
**Urbanizacion "Las Cabanas II" Chalet no. 9**
**Las Rozas Madrid(ES)**

(72) Inventor: **Dominguez Montes, Juan**
**Urbanizacion "Las Cabanas II" Chalet no. 9**
**Las Rozas Madrid(ES)**

(74) Representative: **Elzaburu Marquez, Alberto et al**
**Sres. Elzaburu Industrial Property Attorneys**
**Miguel Angel, 21**
**E-28010 Madrid(ES)**

## Description

Background of the Invention

This invention refers to reproducing three--dimensional whether static or moving images.

In this patent an installation is claimed for obtaining moving three-dimensional, that is four-dimensional, images whether in colour or in black and white, characterized in that it comprises some stereoscopic photographing means including a single or a plurality of cameras with a corresponding plurality of optical objectives whose optical centres are to be found in a horizontal plane; and by some reproduction means comprising as many projection objectives, included in a single or different projectors, as objectives that are used in the take arranged in such a way that they project their images onto a screen made of transparent or specular optical material comprised by an optical sheet of vertical cylinders which reproduces the horizontal parallax, and of another optical sheet of horizontal cylinders, allowing observation of the vertical component of the image.

Before defining the present invention it is considered convenient to study the prior art knowledge whereof has been acquired and, in this way, demonstrate the great advantages of the present invention.

Appreciation of the distance that lies between an observer and the objects observed is achieved by the brain synthesizing two images taken from two different points, one from the right eye and the other from the left eye.

The systems of taking and reproducing images with depth, developed up to now, can be divided into two major groups. The most modern ones, after 1947, based on the formation of images due to the interference of beams of coherent light, holographic systems, and those which are not recorded through wave interference, non-holographic systems.

Amongst the latter the stereoscopic and three-dimensional systems differ from one another. The term stereoscopic (stereogram) is used for systems in which two images taken at a distance approximately equal to the average distance between the human eyes are used in the reproduction. The term three-dimensional (Panoramagram) is used when the system uses a greater number of taken and reproduced images, allowing observation within a wide viewing angle, without inconveniencing the observers by placing before them optical filters or any other contrivance.

The field of application of this invention is then that of three-dimensional reproduction, as has just been defined, in motion.

Below we will examine the various systems used for taking and reproducing images with depth.

The technique of holography is based on photography by reconstruction of wavefronts. These systems require coherence of the light sources of both image taking and image reproduction. The temporal coherence requires the light to be monochromatic. The spatial coherence requires the light to come from a point source.

Both the objects which are going to be photographed and the images which have to be reproduced need to be illuminated with coherent light only (dark room), therefore the development of these systems has been intimately linked with the development of the laser, since its light is intense and highly coherent.

The laser technique is complex and expensive and holograms produced in this way require great technical difficulties to be overcome.

This has hindered the commercialization of systems, using this process, capable of achieving photographs of distant objects which, like the moon, cannot be lit up with a coherent beam. It turns out to be impossible to photograph sunsets of reflections of the sun or moon on the sea, landscapes, etc. Finally, as observation through transparency is necessary, the size of the reproduced image is limited.

Among the non-holographic systems are the stereoscopic systems, which are suitable for projection, based on bringing a different image to each eye. The photograph is taken with two cameras, the objectives of which are separated from one another by a distance approximately equal to the average value of the distance between the human eyes.

The systems of reproduction are very varied, depending on the procedure used to bring 'the image taken by the lefthand camera to the left eye and that taken by the righthand camera to the right eye. They all require the observer to be provided with an optical, electronic or electromechanical appliance in front of his eyes.

Without attempting to be exhaustive, we will mention some of the most well known methods used in stereoscopic projections with motion, such as those which use coloured, polarized or shuttering filters.

The systems with coloured filters (anaglyphs) are able to bring a different image to each eye by placing a filter in front of each of the observer's eyes, red (or yellow) for one eye, green (or blue) for the other, each image being reproduced well in red (or yellow) or in green (or blue), as it corresponds to one or other of the

2

eyes.

In systems with polarized light, polarized filters are placed before the observer. The planes of polarization of the filters of the eyes are perpendicular to one another. The planes of polarization of the light which reproduces the images are the same as those of the observer's filters.

In the shuttering systems, a system is placed before the observer which can interrupt the vision of each eye by shuttering. Each eye has a viewing time which coincides with the shuttering of the other. The images are also reproduced alternately and with the same frequency.

The principal limitation of the stereoscopic systems used in projection is that they require the observer to be inconvenienced by placing before him coloured or polarized filters or a shuttering mechanism.

A great variety of systems have been designed suitable for capturing or for reproducing stereoscopic images, amongst which we will stress Fazekas' camera U.S. Patent No. 4,525,045 wherein a system of lenses is described capable of being coupled to a conventional camera, and enabling the latter to capture on the same film the two images comprising the stereoscopic pair.

Other stereoscopic systems also exist in which bringing a different image to each eye is achieved by means of procedures which are not suitable for projection. Amongst these are those which place an optical systems between the observers and the reproduced image, such as the Brewster prism method, (1B) , the Wheatstone flat mirror method (1B) or Kemp's concave mirror method, U.S. Patent 4,623,223.

However, these systems do not belong to the field of three-dimensional reproduction.

Amongst the three-dimensional systems of reproduction using ordinary light developed up to the present, there are some which are capable of reproducing images in three dimensions and in motion, allowing the observer to move from left to right or viceversa, the reproduced image showing its right or left hand respectively. Among these there are the systems for reproduction of the horizontal parallax. The factors to consider in a comparison of the various systems are:

The orthoscopic viewing angle, the quality of the reproduced image and the cost resulting from the complexity of manufacture.

All the devices for three-dimensional reproduction developed up till now use a "diffusion surface" on which the various images are generated, projected, transmitted, amplified or, simply, printed. Typical of generation is the cathode ray tube screen, for projection onto opaque or translucent surfaces, used by commercial cinematography or television projection and transmission, which use light conductors or amplifiers.

It is important to emphasize one essential characteristic common to any diffusion surface, which greatly affects the design of all devices for three-dimensional reproduction which use this type of surface.

This essential characteristic is that: "Any point of the diffusion surface is transformed into a centre transmitting light photons in all directions".

As a consequence, any observer, whatever his position, will see the whole image reproduced on the diffusion surface.

If two or more images are reproduced at the same time, at the same point of the diffusion surface, the photons coming from the different images appear mixed together, whatever their direction.

For this reason, distinguishing the different images reproduced on the diffusion surface is achieved by reserving a different place for each of them, that is, by means of "scalar image differentiation".

All the systems designed up till now manage to reserve a different position on the diffusion surface for each image using a different procedure. This position is usually a very fine vertical stripe.

In Morishita's U.S. Patent n° 4,737,840, the procedure used is that of projection through a vertically striped shield plate, placed in front of the diffusion surface. Each projection always appears on the diffusion surface in a different place, in a different vertical stripe. The procedures to achieve this objective mentioned by Morishita are both complex and expensive.

In Haisma's U.S. Patent n° 4,571,616 also, each image appears within a different vertical stripe. In this case the images are positioned after being guided along light conductors.

In Glenn's U.S. Patent n° 3,508,920 each image likewise appears located in a different vertical stripe. In this case the images position themselves after passing through a plane of cylindrical lenses (lenticular sheet).

In this case, as in all the systems in use designed up till now, the view is made through an optical sheet of cylindrical lenses, (lenticular sheet), the focal lines of which are contained on a plane at which the diffusion surface is situated.

It is important to bear in mind that the transverse dimensions of each vertical image stripe must be "n"

(1B) Norling, J.A., The stereoscopic Art. ... A Reprint. J. Smpt 60, n° 3, 286-308 (March 1953)

times smaller than the size of the cylinder, "n" being the number of images to be reproduced. For this reason the size of the cylinder is limited by that of the image, which is in turn n times smaller than that of the said cylinder.

The quality of the image is limited by the transverse dimensions of the cylindrical lens which is in turn limited by that of the width of the vertical stripe of the image.

The maximum viewing angle is limited by the aperture of the cylinder, the relationship between the transverse dimensions of this and its focal length; if this angle is exceeded, observation is made on an image stripe corresponding to the attached cylinder, producing an undesirable pseudoscopic effect, that is, inverted depth.

In these systems the optical sheet of vertical cylinders is at its focal length from the diffusion surface, a focal length of around a millimeter, and it is the diffusing screen itself which makes the simple development of front projection systems impossible.

Below we will give a critical examination of the three-dimensional systems developed up till now, which we have described above.

In all the systems for reproducing the horizontal parallax of three-dimensional images which we have just discussed, the following are used:

A - The optical sheet of vertical cylinders, at the focal plane of which is placed a diffusion surface.

B - Diffusion surface on which the images appear divided into fine stripes.

The same number of image stripes as are used are made to correspond to each cylinder.

To ensure a good quality reproduced image it will be necessary:

1.- That no space appear between each two adjacent cylinders. The cylinders must be in contact with one another.

2.- That the size of the cylinders be small enough to be imperceptible.

3.- That the variation of the horizontal parallax appear to be continuous, within a viewing angle wide enough so that pseudoscopy does not occur for any observer.

The 1st condition requires the transverse dimensions of the image, group of n stripes, corresponding to each cylinder, to be at the most the transverse dimensions of the latter.

According to this condition, the maximum viewing angle without pseudoscopy is expressed by

$$2 \ \mathrm{arc} \ \tan \left( \frac{\text{cylinder transverse dimensions}}{2 \ \mathrm{x} \ \text{focal length}} \right) ,$$

which for ordinary materials, the refractive indices of which vary around 1,5, takes a value of approximately 54°; clearly insufficient in the majority of cases, since it implies ±27° around the perpendicular at the diffusion surface.

The preservation of this angle across the whole screen requires a precise correspondence between each cylinder and its image (group of n stripes). This correspondence is difficult to achieve and therefore expense to manufacture.

The 2nd condition requires the size of the cylinders to be small enough to be imperceptible.

The condition of not being perceptible for a stripe of transverse dimensions "d" for a healthy eye is that

$$d < \frac{\text{viewing distance in meters}}{3,500}$$

For example:  0,3 mm. for a distance of 1 m. and
0,08 mm. for a distance of 0,25 m.

If 10 images are used, the transverse dimensions of each image stripe have to be 0.03 and 0.008 mm., respectively. These values are of the order of only 15 times greater than the wavelength of visible light. If a number of images greater than 10 were used, the situation would, logically, become worse. The difficulties in manufacture are obvious and, therefore, the price of the commercial product would be high.

The 3rd condition requires the orthoscopic viewing angle to be greater than 54° and a continuous

transition from one image to the next, when the observer moves from right to left or viceversa. Both restrictions resulting from this 3rd condition are incompatible with the 1st and 2nd conditions discussed above.

The first would require an image through a cylinder of greater size than this, which would lead to a loss of image quality. The second would require the use of such fine image stripes that their manufacture would not be viable.

These reasons explain why these systems have not been brought onto the market successfully, not even in cinematography with small projection screens.

## SUMMARY OF THE INVENTION

To remove the drawbacks mentioned a system has been developed which, as a distinctive feature, does not use a diffusion surface on which the different images are focused. There is an ideal plane, on which the images are focused, but this plane is not materialised.

For reasons of instruction this plane can be imagined as a transparent surface.

To follow the same order of explanation as that used in the examination of the previous procedures, we will begin by defining the fundamental characteristic of any transparent surface:

"Any point of the transparent surface is transformed into a centre which emits photons, which retain the same direction as the incident photon".

Consequently:

- Any observer, whatever his position, will see a single point of the projected image. This point is the intersection with the transparent surface of the line which joins the optical centre of the projector with the optical centre of the observer.
- If two or more images are projected at the same time from different spatial positions onto the transparent surface, the photons coming from the different projections retain their direction after crossing it. The different images can be distinguished because the photons of each one emerge from this transparent surface at a different angle: that is "Angular image differentiation" can be used.

To describe the invention which is the subject of this report briefly, an optical sheet of vertical cylinders is placed before this transparent surface and at a distance equal to the focal length of these cylindrical lenses.

The choice of focal length of these cylindrical lenses is made in such a way that the ratio between the transverse dimension of the cylinder and its focal length is the value obtained when dividing the double of the distance between two adjacent projection objectives by the projection distance (= distance between the optical center of the projection objective and the plane in which the images are focused).

After positioning the vertical cylinders, with the above characteristics, any observer in any position will go on to see as many segments of images as projectors. These segments will line up in a single rectilinear segment. This rectilinear segment will be different for each point of observation and will be contained in the line resulting from the intersection of the plane which contains the projection objectives and the observer with the transparent projection surface.

A second optical sheet of horizontal cylinders, the focal lines of which are on the same focal plane as the vertical cylinders and, therefore, coincident with transparent screen devised for purposes of instruction, will be responsible for converting the above segment into a rectangle, the base of which is the same size as this same segment and the height of which is that of the transparent surface.

The focal length of these horizontal cylinders has to be as small as possible contrasted with their width (semicircular cylinders), in order that their aperture allows the view, from any point, of a rectangle as tall as the optical system itself.

The advantages of this system as opposed to all the other systems in general and contrasted in particular with that of Morishita, Haisma and Glenn are:

A) The viewing angle can be made as big as may be desired, depending only on the number of projection objectives, the distance between them and the projection distance.

B) The size of transverse dimensions of the cylinders are not limited by the number of images and can be designed to be as small as may be desired, so the quality of the image is only limited by the manufacturing conditions of these cylinders.

C) No pseudoscopy is produced when the observer leaves the field of vision.

D) It is not necessary to create any complex device for dividing the projected images into ordered and interlooking vertical stripes, so the system becomes cheaper and is very simple to implement.

It is worth pointing out as a drawback that this system is valid only for projection and cannot be used in photographic reproductions on paper. On the other hand, it is possible, with this system to design three-dimensional slide viewers.

E) As there is no diffusion surface between projectors and optical system, the two transparent optical sheets above can be cut on the same specular surface, resulting in an optical sheet of as many rectangular mirrors as results from the product of the number of vertical cylinders by the number of horizontal cylinders. In this case projection would be from the front.

BRIEF DESCRIPTION OF THE FIGURES

| | |
|---|---|
| Figures 1 and 2 | explain the ideas upon which the new system is based. |
| Figures 3, 4 and 4 | describe the system which is the subject of this report. |
| Figure 1 | shows in diagrammatic form an observer O, looking at an object P through the window AB and shows that the bundle of homocentric rays $I_1$, corresponding to the left eye of the observer $O_1$, and the bundle of homocentric rays $D_1$, corresponding to the right eye of the observer $O_1$ are contained within the homocentric beams $F_1$, $F_2$...$F_n$. |
| Figure 2 | shows in diagrammatic form m observers $O_1$, $O_2$...$O_m$ looking at an object P through the window AB and demonstrates that the bundle of homocentric rays $I_1$, $I_2$...$I_m$ corresponding to the left eyes of the observers $O_1$, $O_2$...$O_m$, and the bundle of homocentric rays $D_1$, $D_2$...$D_m$, corresponding to the right eyes of the observers $O_1$, $O_2$...$O_m$ are contained within the homocentric beams $F_1$, $F_2$...$F_n$. |
| Figure 3 | shows n cameras $CC_1$, $CC_2$...$CC_n$ separated from one another a distance $K_c$ and with their optical axes parallel. |
| Figure 4 | shows the arrangement of the projectors $PR_1$, $P_2$...$PR_n$ and of the optical sheet of vertical cylinders (1) of focal length f and transverse dimensions d. The distance between two adjacent projectors is $K_r$ and the projection distance B. |
| Figure 5 | shows the optical system which is the subject of this invention. In its front part can be seen the optical sheet of vertical cylinders (1), in its rear part the optical sheet of horizontal cylinders (2); e is the thickness of the system, V is the viewing angle, S is the horizontal angle beneath which two projectors can be seen, f the focal length of the vertical cylinders, B the projection distance, $K_R$ the distance between two adjacent projectors and $PR_1$, $PR_2$...$PR_n$ the location of the optical centres of the projection. |

DETAILED DESCRIPTION OF THE PREFERRED EMBODIMENTS

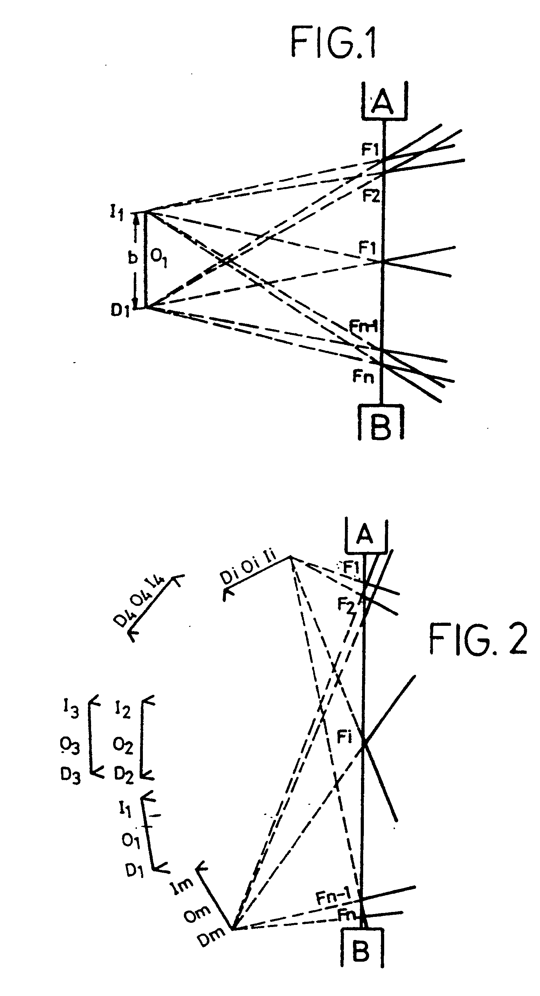

Let there be an observer $O_1$ looking at an object P through a window AB wide made in a wall perpendicular to the lines of vision to infinity. See fig. 1 which represents the optical diagram of an observer $O_1$, looking at an object P through the window AB.

This figure 1 shows this observer $O_1$, in plan view with his right eye $D_1$, and left eye $I_1$. The bundle of light rays which, coming from the landscape, pass through $I_1$ (homocentric on $I_1$), is the one which serves to form the image of the left eye. Similarly, the bundle of light rays which pass through $D_1$, (homocentric on $D_1$) serves to form the image of the right eye.

The perception of relief is achieved when the brain synthesizes the images from the left and right eyes, formed by these two bundles of light rays, which pass through the non coincidental points $I_1$ and $D_1$.

The straight line AB, contained in the drawing of the plane containing the window is considered to be broken up into the series of infinitely close points $F_1$, $F_2$...$F_1$...$F_{n-1}$, $F_n$.

It is important to note that every ray belonging to the homocentric beam $I_1$, as well as every ray belonging to the homocentric beam $D_1$, is contained in the group of homocentric beams $F_1$, $F_2$...$F_{n-1}$, $F_n$, so long as the distance $F_1$-$F_{i-1}$, for whatever i is, is small enough.

If several observers $O_1$, $O_2$...............$O_m$ are considered, looking at the same object through the window AB above and situated at different points, as it is not necessary to consider the vertical parallax, all the pairs of eyes can be represented by their projection on a common horizontal plane. See figure 2 which represents the optical diagram of m observers observing an object through the window AB.

It is clear that, for obvious topological reasons, any homocentric beam $I_j$ or $D_j$ is contained within the series of homocentric beams $F_1$, $F_2$...$F_i$...$F_{n-1}$, $F_n$ so long as the distance $F_i$-$F_{i-1}$ is small enough.

In other words:

"The image formed taking as a basis the homocentric beams $I_j$ or $D_j$ corresponding to the left and right eyes of the observer j, and for any observer j, can be synthesized by appropriately selecting and

6

composing sections of the images formed taking as a basis the homocentric beams $F_1$, $F_2$...$F_i$...$F_{n-1}$, $F_n$, so long as the distance $F_i$-$F_{i-1}$ is small enough".

The demonstration continues to be valid, whatever the curve may be which contains the homocentric beams $F_1$, $F_2$...$F_i$...$F_{n-1}$, $F_n$, so long as it is continuous and passes through points A and B.

It has been seen experimentally that the number of images required to photograph depth is much greater than that required to reproduce it.

It has been demonstrated that a simple way of photographing the third dimension would be to have available as many cameras as $F_i$ points are used.

Now, experience tells us that this number can be small. So the procedure for taking the images will consist of:

A series of images taken by cameras $CC_1$, $CC_2$, $CC_3$...$CC_n$ the optical axes of which are equidistant and the optical centres of which follow a horizontal line ZZ'.

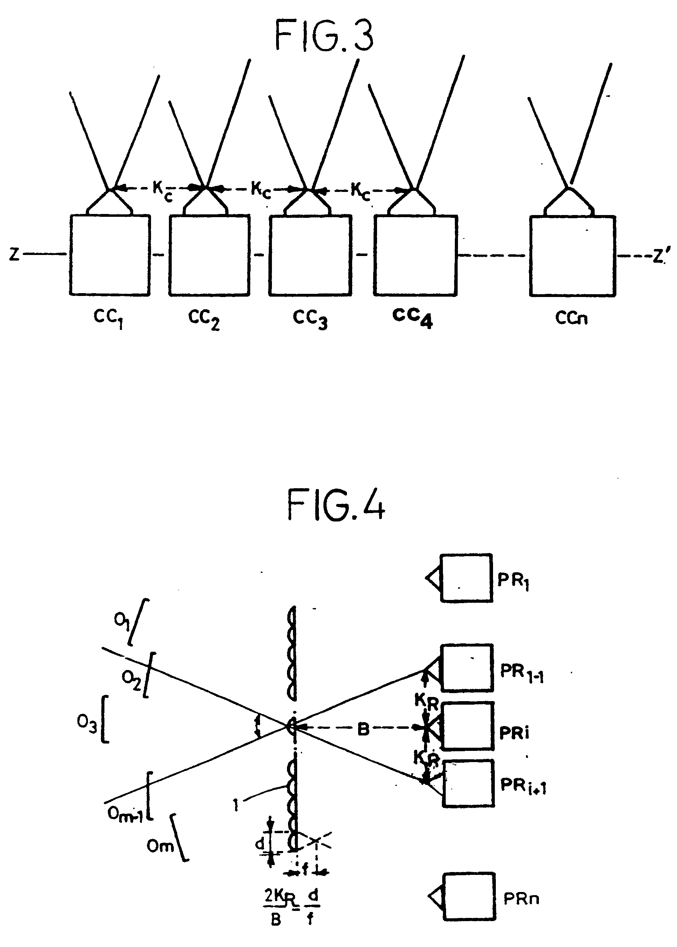

The distance between the cameras taking the images is called $K_c$. (See figure 3 which shows diagramatically the arrangement of the cameras when the image is taken).

For reproduction an optical sheet of converging cylindrical lenses will be used, through which the projection of the images taken by the cameras show in fig. 3 will be observed. To do this the same number of projection objectives will be used, equidistant from one another, as were used in taking the image. Each one of them will project an image onto the transparent cylindrical optical sheet above.

It is important to bear in mind that the angle formed by the optical axes of the projectors has to be the same as that formed by the optical axes of the cameras. Otherwise the flat surfaces of equal parallax in the image taking would be curved surfaces in the reproduction.

The axes of the cylinders (1) will be vertical, that is, perpendicular to the plane of the ground. See fig. 4, which represents in diagram form the arrangement of the projection objectives $PR_1$, $PR_2$...$PR_n$ separated from one another a distance $K_R$ projecting onto the cylindrical optical sheet for reproduction.

The distance B from the projectors to the sheet is decided by the focal length of the projectors and the size of the screen or cylindrical optical sheet.

The cylindrical optical sheet (1) is formed by cylinders of transverse dimensions d, small enough to be imperceptible; experience tells us that for a healthy eye the transverse dimensions d of the cylinder will have to be smaller than the viewing distance in metres divided by 3,500, and a focal length f given by

$$f = B \frac{d}{2K_R}$$

deduced by comparing the aperture of each cylinder d/f with that below which three projectors

$$\frac{2K_R}{B}$$

are seen.

If the projectors are separated from one another, the parallax of reproduction diminishes although the three-dimensional viewing angle increases and vice versa.

For a determined number of projection objectives at each variation of distances between them, if the same projection distance is maintained, there corresponds a different cylindrical sheet; since the ratio between transverse dimension and focal length of the cylinder must be made to be equal to the value obtained when dividing the double of the distance between two adjacent projection objectives by the projection distance, i.e. the distance between the optical center of the projection objective and the plane in which the images are focused.

If one only had available the optical sheet of vertical cylinders (1) described previously, the view of the images would be restricted to a rectilinear segment composed of as many subsegments as images of projection objectives. This rectilinear segment is given by the intersection of the plane which contains the abovementioned transparent optical sheet of vertical cylinders with the plane defined by the projection objectives and the viewing point.

So that the vertical planes are adequately formed, another optical sheet of horizontal cylinders is used,

EP 0 273 845 B1

of sufficient aperture so that any observer, independently of his height, is able to see the whole vertical component of the image. In general semi-circular cylinders can be chosen, since these have the maximum aperture, with transverse dimensions which, as in the vertical case, must be small enough so as to be imperceptible.

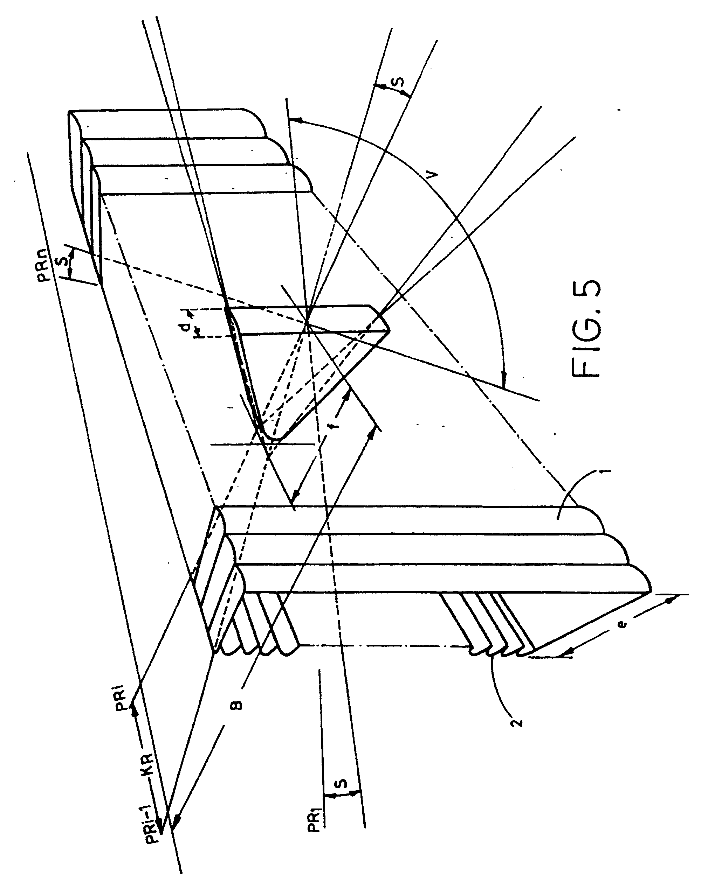

So, the optical system for reproduction will remain as shown in Fig. 5 and its view will be made through transparency. In this figure 5 the viewing angle V can be appreciated, a function of the quotient between the distance of separation from the first to the last projection objective $(n-1)K_R$, the projection distance B and the aperture of the vertical cylinders.

The viewing angle V is expressed by the equation:

$$V = 2 \, arc \, tan \, \frac{(n-1)K_R}{2B} + 2S \cong 2 \, arc \, tan \, \frac{(n+1)K_R}{2B}$$

In a similar way the angle 2S of aperture of the vertical cylinders can be seen, a function of the quotient between the separation between three adjacent projection objectives $2K_R$ and the projection distance B. A quotient which is the same as that obtained between the transverse dimensions of the vertical cylinder d and its focal length f.

In this figure the view of the vertical component through the optical sheet of horizontal cylinders can also be appreciated.

So that the focal lines of the horizontal and vertical cylinders coincide on the same plane, the thickness of the optical system must have the value:

$$e = \frac{n}{n-1} (r_2 - r_1)$$

$r_1$ and $r_2$ being the radii of the vertical and horizontal cylinders respectively and n the refractive index of the substance from which the optical system is made.

The system described (see figure 5) is composed of an optical sheet of horizontal cylinders (2) and another, perpendicular to the first, of vertical cylinders (1) on both faces of a transparent sheet of thickness e.

Both sheets can be cut onto the same surface which would lead to a repetitive bidimensional arrangement of toroidal surfaces with the same horizontal and vertical optical powers as in the preceding case. In this case, as the distance between horizontal and vertical cylinders is nil, if these have a different focal length, the superimposition of the horizontal and vertical lines in the image reproduced can be achieved with a different focal length for the horizontal and vertical lines in the projection objectives. The system can also be designed with the same focal length for both optical sheet, their different aperture being achieved through their different transverse dimensions.

A second version can be achieved by substituting the transparent sheet with a specular one, with the same optical characteristics. In this case the image will be observed by reflection and the projection will be done from the front.

The combination of these variations would give a large number of possible versions.

CONCLUSION

The system described here is suitable for the reproduction of four-dimensional images. Its use for three-dimensional cinematography and television with motion is possible.

The image is taken through several cameras, the optical centres of which are in different spatial positions.

As many projection objectives are used in the reproduction of the image as cameras were used is taking the image. The angle formed by the optical axes of the projectors has to be the same as that formed by the cameras. The observation of these images can be made through (reflected upon) a double transparent (specular) cylindrical optical sheet.

The optical system for reproduction is made up of two optical sheets, composed of vertical cylinders, 1,

8

and horizontal cylinders, 2, perpendicular to one another, these optical sheets must have transverse dimensions small enough so as to be imperceptible to the observers.

The angle of aperture of the optical sheet of vertical cylinders must be the exact angle to be able to take three projection objectives and for this its focal length must be of the value:

$$f = \frac{dB}{2K_R}$$

where

d = transverse dimensions of the cylinders

B = projection distance

$K_R$ = distance between the axes of two adjacent projection objectives.

The angle of aperture of the horizontal optical sheet (2) must be sufficient so that all the observers can see the full height of the reproduced image. In general these can be semicircular.

The thickness of the screen is determined by the condition that both the focal lines of the horizontal cylinders and those of the vertical cylinders are on the same plane.

This thickness value is determined by

$$e = \frac{n}{n-1}(r_2 - r_1)$$

Where:

n = the refractive index

$r_2$ = radius of the vertical cylinders

$r_1$ = radius of the horizontal cylinders

## Claims

1. Device for reproducing static three-dimensional or moving, that is four-dimensional, scenes by projection, without the use of coherent light, comprising photographic means including a single or a plurality of cameras ($CC_1...CC_n$) with a corresponding plurality of optical objectives whose optical centres are located in a horizontal plane and by reproduction means comprising the same number of projection objectives as that utilized in photographing, included in a single or various projectors ($PR_1...PR_n$) arranged in such a manner that they project images taken with said photographic means onto a screen made of transparent optical material, further comprising an optical sheet of vertical cylinders (1) which reproduce the horizontal parallax of the image of the scene, and another optical sheet of horizontal cylinders (2) which allow the observation by transparency of the vertical component of the image of the scene, said sheet of vertical cylinders consisting of adjacent cylinders of small enough transverse dimension (d) or distance between the cylinder axes so small as to be imperceptible, such that the ratio between said transverse dimension and the focal length (f) of said vertical cylinders is the value obtained when dividing the double of the distance between two adjacent projection objectives ($K_R$) the projection distance (B), i.e. the distance between the optical center of the projection objective and the plane in which the images are focused; and said sheet of horizontal cylinders being composed of adjacent cylinders of a transversal dimension or distance between cylinders so small as to be imperceptible and of a semicircular cross-section or of an arc of a circle of sufficiently small radius so as to allow all the observers to see the image of the scene in its full height, and the space (e) between said two sheets is such that the focal lines of said horizontal cylinders are on the same plane as that which contains the focal lines of said vertical cylinders, that is, the plane where the images are focused.

2. Device in accordance with Claim 1, characterized in that the optical sheet of vertical cylinders is

EP 0 273 845 B1

replaced by spherical lenses of the same optical power.

3. Device in accordance with the preceding Claims, characterized in that the screen made of said transparent optical material is replaced by a specular screen having the same vertical and horizontal absolute optical power as said sheets of vertical and horizontal cylinders, the observation then being by reflexion.

## Revendications

1. Dispositif pour obtenir par projection des scènes tridimensionnelles statiques ou en mouvement, c'est-à-dire des scènes à quatre dimensions, sans utilisation de lumière cohérente, comportant des moyens photographiques comprenant une seule caméra ou plusieurss caméras (CC1, ...CCn) avece plusieurs objectifs optiques correspondnts, dont les centres optiques sont dans un plan horizontal, et des moyens de reproduction comportant le même nombre d'objectifs de projection que celui utilisé en photographiant, inclus dans un seul projecteur ou dans des projecteurs différents (PR1 ...PRn), disposés de telle sorte qu'ils projettent des images prises avec lesdites moyens photographiques sur un écran fait d'un matériau optique transparent qui, en outre, comporte une feuille optique de cylindres verticaux (1) qui reproduisent la parallaxe horizontale de l'image de la scène et d'une autre feuille optique de cylindres horizontaux (2) qui permettent l'observation par transparence de la composante verticale de l'image de la scène, caractérisé en ce que ladite feuille de cylindres verticaux consiste en des cylindres adjacents de dimension transversale (d) suffisamment petite ou d'une distance entra les axes des cylindres si petite qu'elle est imperceptible, de telle sorte que la relation entre ladite dimension transversale et la longueur focale (f) desdits cylindres verticaux est la valeur obtenue lorsqu'on divise le double de la distance existant entre deux objectifs de projection adjacents (KR) par la distance de projection (B), c'est-à-dire la distance entre le centre optique de l'objectif de projection et le plan dans lequel les images sont focalisées; et en ce que ladite feuille de cylindres horizontaux est composée de cylindres adjacents de dimension transversale ou une distance entre les cylindres si petite qu'elle est imperceptible et de section semi-circulaire ou faisant un arc de cercle de rayon suffisamment petit de manière à permettre aux observateurs de voir l'image de la scène dans toute sa hauteur, et l'écart (e) entre lesdites deux feuilles est tel que les lignes focales de ces cylindres horizontaux sont dans le même plan que celui qui contient les lignes focales des cylindres verticaux, c'est-à-dire le plan où les images sont focalisées.

2. Dispositif selon la revendication 1, caractérisé en ce que la feuille optique des cylindres verticaux est remplacée par des lentilles sphériques de la même puissance optique.

3. Dispositif selon les revendications antérieures, caractérisé en ce que l'écran fait dudit matériau optique transparent est remplacé par un écran spéculaire ayant la même puissance optique absolue verticale et horizontale que lesdites feuilles de cylindres verticaux et horizontaux, l'observation alors étant par réflexion.

## Patentansprüche

1. Vorrichtung zum Reproduzieren statischer dreidimensionaler oder sich bewegender, d.H. 4-dimensionaler Szenen durch Projektion ohne Verwendung von kohärentem Licht, bestehend aus photographischen Mitteln mit einer einzigen oder einer Anzahl Kameras ($CC_1...CC_n$), mit einer entsprechenden Anzahl optischer Objektive, deren optische Zentren in einer horizontalen Ebene liegen, und Reproduktionsmittel, die die gleiche Anzahl Projektionsobjektive wie die beim Photographieren verwendeten aufweisen und in einem einzelnen oder verschiedenen Projektoren ($PR_1....PR_n$) eingebaut und derart angeordnet sind, dass sie die mit diesen photographischen Mitteln aufgenommenen Bilder auf einen Schirm projizieren, der aus transparentem Material besteht und ferner eine optische Schicht aus vertikalen Zylindern (1), welche die horizontale Parallaxe des Szenenbildes reproduzieren, und eine andere optische Schicht aus horizontalen Zylindern (2), welche mittels Transparenz die Beobachtung der vertikalen Komponenten des Szenenbildes ermöglicht, aufweist, wobei diese Schicht vertikaler Zylinder aus benachbarten Zylindern besteht, die eine so kleine Querabmessung (d) oder Abstand zwischen den Zylinderaxen aufweisen, dass sie nicht wahrnehmbar sind, so dass das Verhältnis zwischen dieser Querabmessung und der Brennweite (f) dieser senkrechten Zylinder derjenige Wert ist, der erhalten wird, wenn das des Abstandes Zweifache zweier benachbarter Projektionsobjektive ($K_R$) durch die Projektionsentfernung (B) dividiert wird, d.h. der Abstand zwischen dem optischen Zentrum des Projektionsobjetivs und der Ebene, in die die Bilder fokussiert werden, und diese Schicht horizontaler Zylinder aus benachbarten Zylindern besteht, deren Querabmessung oder Abstand zwischen den Zylindern klein genug ist, so dass sie nicht wahrnehmbar sind und einen halbkreisförmigen Querschnitt oder einen Kreisbogen aufweisen, der einen hinreichend kleinen Radius hat, so dass alle Beobachter das Szenenbild in voller Höhe sehen, wobei der Raum (e) zwischen diesen bildenden Schichten so ausgelegt ist, dass die Brennpunktlinien dieser Horizontalen Zylinder in der gleichen Ebene liegen wie diejenige, die die Brennpunktlinien dieser vertikalen Zylinder enthält, d.h. die Ebene, in der die Bilder fokussiert werden.

2. Vorrichtung nach Anspuch 1, dadurch gekennzeichnet, dass die optische Schicht aus vertikalen Zylindern durch sphärische Linsen der gleichen optischen Stärke ersetzt ist.

3. Vorrichtung nach den vorhergehenden Ansprüchen, dadurch gekennzeichnet, dass der aus diesem transparenten optischen Material bestehende Schirm durch einen spiegelden Schirm ersetzt ist, der die gleiche absolute senkrechte und horizontale optische Stärke wie diese Schichten aus senkrechten und horizontalen Zylindern aufweist, wobei die Betrachtung dann durch Reflektion erfolgt.

# FIG.1

# FIG. 2

12

# FIG.3

$$\frac{2K_R}{B} = \frac{d}{f}$$

# FIG.4

FIG. 5

EP 0 273 845 B1